# EUROPÄISCHE PATENTSCHRIFT

(11) **EP 0 657 091 B1**
(45) Veröffentlichungstag und Bekanntmachung des Hinweises auf die Patenterteilung: **03.04.1996**
(21) Anmeldenummer: 93917702.8
(22) Anmeldetag: 29.07.1993
(51) Int. Cl.: H05B 41/29, H05B 41/392

(54) **FREISCHWINGENDER WECHSELRICHTER MIT IMPULSBREITENSTEUERUNG**
FREELY OSCILLATING INVERTER WITH PULSE WIDTH CONTROL
ONDULEUR A OSCILLATIONS LIBRES AVEC COMMANDE DE LA LARGEUR D'IMPULSION

(30) Priorität: 28.08.1992 DE 4228641
(43) Veröffentlichungstag der Anmeldung: 14.06.1995
(73) Patentinhaber: Tridonic Bauelemente GmbH, A-6850 Dornbirn (AT)
(72) Erfinder: PRIMISSER, Norbert, A-6833 Fraxern 171 (AT); LUGER, Siegfried, A-6850 Dornbirn (AT)
(74) Vertreter: Schmidt-Evers, Jürgen, Dipl.-Ing.
(86) Internationale Anmeldenummer: EP9302034
(87) Internationale Veröffentlichungsnummer: WO9406261

(56) Entgegenhaltungen:
- EP-A- 0 420 251
- EP-A- 0 435 231
- US-A- 4 388 563

## Beschreibung

Die vorliegende Erfindung betrifft ein Vorschaltgerät zum Anschluß einer Gasentladungslampe gemäß dem Oberbegriff des Anspruches 1.

Aus der DE 30 14 419 ist ein Vorschaltgerät bekannt, dessen freischwingender Wechselrichter zwei Transistoren aufweist, die abwechselnd durchschalten, so daß am Ausgang des Wechselrichters ein Rechtecksignal entsteht. Die Steuerung der Transistoren erfolgt mit Hilfe von Sekundärwicklungen eines Transformators, dessen Primärwicklung im Lastkreis liegt. Die Schwingfrequenz des Wechselrichters wird bei einer solchen Anordnung durch die Baulemente, z.B. durch die Eigenschaften des Transformators bestimmt (z.B. Sättigung).

Aus der EP-A-0 435 231 ist eine ähnliche Schaltungsanordnung mit einer Primärwicklung im Lastkreis und Sekundärwicklungen im Steuerkreis zweier elektronischer Schalter bekannt, bei der die Helligkeit einer angeschlossenen Lampe durch kombiniertes Verändern des Tastverhältnisses zwischen den beiden elektronischen Schaltern und der Frequenz der Wechselrichter-Ausgangsspannung eingestellt wird. Die Veränderung des Tastverhältnisses und der Frequenz erfolgt durch Verändern des Durchlaßwiderstandes einer Steuerschaltungl abhängig von aus der Schaltungsanordnung des Vorschaltgerätes abgeleiteten Steuerinformationen.

Zum Dimmen einer Gasentladungslampe sind des weiteren im Stand der Technik (EP-A-0 338 109) Wechselrichterschaltungen bekannt, die von einstellbaren Frequenzgeneratoren gesteuert werden, also keine freischwingenden Systeme darstellen.

So beschreibt u.a. die US 4,388,563 eine Wechselrichterschaltung, bei der die Gleichrichterspannung mittels Transistorschalter gechoppt wird, um eine höherfrequente lampenspannung zu erzielen. Die Schaltzustände der insgesamt vier Transistorschalter werden von einer Steuerschaltung gesteuert. Zwei der vier Transistorschalter dienen zur Pulsweitenmodulation des an die angeschlossene lampe angelegten Spannungssignals, wodurch die an die lampe abgegebene Leistung verändert und die Lampenhelligkeit eingestellt werden kann. Zwischen den Steuerkreisen der zur Pulsweitenmodulation dienenden Transistoren und dem Lastkreis besteht keine Kopplung über einen Transformator, wie er anhand der DE 30 14 419 zuvor beschrieben wurde.

Eine Herstellung von Vorschaltgeräten mit solchen zwangsgesteuerten Wechselrichtern ist jedoch teurer als die mit selbstschwingenden Wechselrichtern.

Die Aufgabe der vorliegenden Erfindung besteht darin, ein Vorschaltgerät für eine Gasentladungslampe anzugeben, das mit einem freischwingenden Wechselrichter arbeitet und trotzdem ein Dimmen der Entladungslampe zuläßt.

Die Aufgabe wird erfindungsgemäß durch die kennzeichnenden Merkmale des Anspruches 1 gelöst.

Eine weitere vorteilhafte Ausgestaltung der Erfindung ergibt sich aus Anspruch 2. Durch die Auswertung der Informationen über lampenspannung und/oder Lampenstrom können verändernde Einflüsse dieser Parameter z.B. auf die Lampenleistung ausgeregelt werden.

Darüberhinaus erlaubt eine weitere vorteilhafte Ausgestaltung der Erfindung gemäß Anspruch 3 auch auf Netzschwankungen zu reagieren, indem die Wechselrichtereingangsspannung als Ist-Größe in der Steuerschaltung verarbeitet wird.

Die Erfindung wird nachfolgend anhand von Figuren erläutert. Dabei zeigen
Fig. 1 ein erfindungsgemäßes Vorschaltgerät mit freischwingendem Wechselrichter und Lastkreis;
Fig. 2a,b die Steuersignale für die beiden Schalter des Wechselrichters in schematisierter Form mit unbeeinflußtem Tastverhältnis,
Fig. 3a,b die Steuersignale für die beiden Schalter des Wechselrichters in schematisierter Form, wobei das Tastverhältnis eines Schalters verändert ist; und
Fig. 4 den Verlauf des durch den Schalter des Sperrwandlers fließenden Stroms.

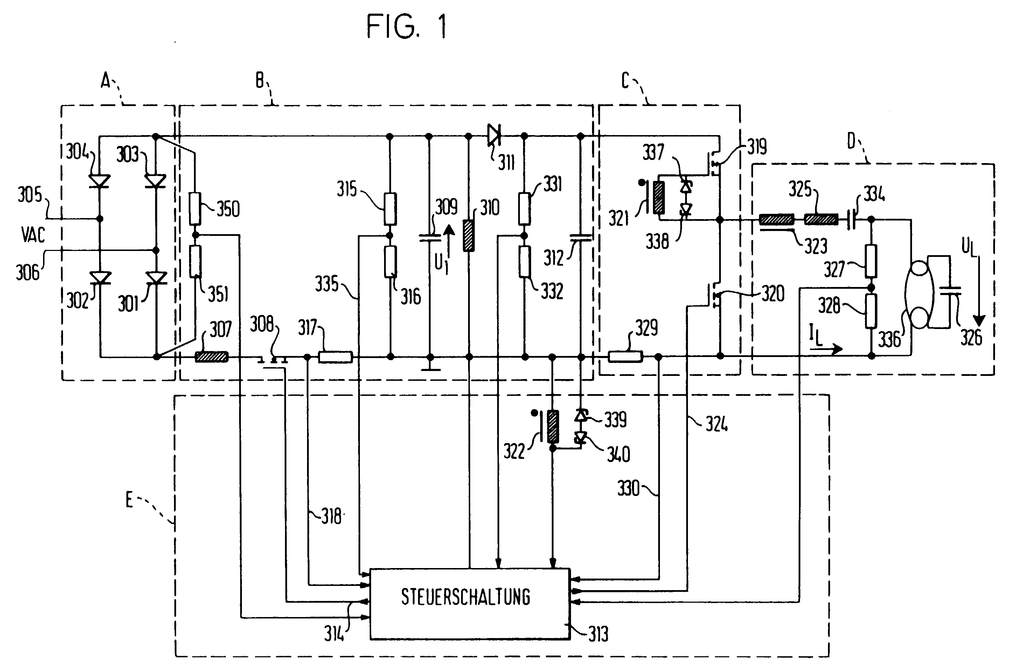

Figur 1 zeigt den kompletten Aufbau eines erfindungsgemäßen Vorschaltgeräts. Die Schaltung selbst wurde zur Erleichertung in fünf funktionelle Blöcke A-E aufgeteilt.

Block A zeigt eine Gleichrichterschaltung mit vier Dioden 301-304, die als Brückenschaltung angeordnet sind. Die an den Eingängen 305,306 der Gleichrichterschaltung anliegende Netzwechselspannung wird in eine gleichgerichtete Wechselspannung umgeformt. Die gleichgerichteten Netzhalbwellen am Ausgang des Gleichrichters A speisen einen Sperrwandler B, der an seinem Ausgang eine Gleichspannung zur Verfügung stellt, dessen Spannungswert zumeist über dem Spannungswert der Netzspannung liegt.

Zwischen den beiden Eingängen des Sperrwandlers B liegt eine Serienschaltung aus einer Spule 307, einem Schalter 308, vorzugsweise einem Transistor oder Feldeffekttransistor, und einem Kondensator 309. Parallel zu dem Kondensator 309 ist eine Spule 310 sowie eine Reihenschaltung aus einer Diode 311 und einem Kondensator 312, an dem die Ausgangsspannung des Sperrwandlers B abfällt, angeordnet. Auf im Sperrwandler B ferner enthaltenen Widerstände 315-317,331,332,350,351 wird später eingangen.

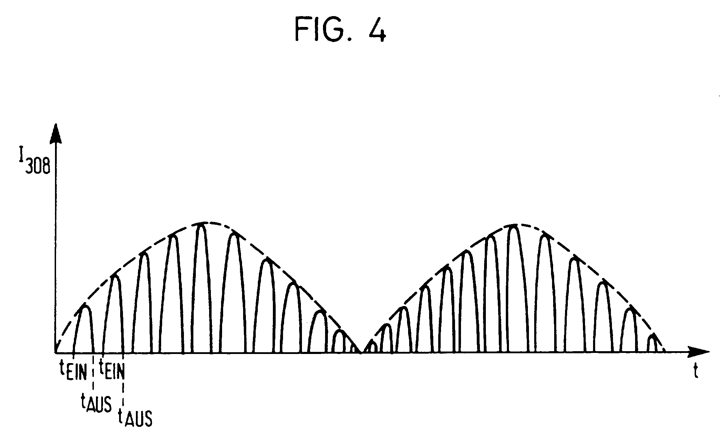

Wird der Schalter 308 leitend geschaltet, durchfließt diesen normalerweise ein sinusförmiger Strom, dessen Frequenz von der Resonanzfrequenz des Serienschwingkreises, der durch die Spule 307 und den Kondensator 309 gebildet wird, bestimmt ist. Dabei werden diese Bauelemente so ausgewählt, daß die Resonanzfrequenz um ein Vielfaches höher liegt als die Netzfrequenz der Eingangsspannung des Gleichrichters. Die maximale Amplitude des sinusförmigen Stroms wird durch die Güte des Sericnschwingkreises definiert. Erfindungsgemäß möchte man jedoch nur halbsinusförmige, mit Abstand hintereinandergereihte Stromimpulse aus dem Netz entnehmen. Dies erfolgt mit Hilfe des Schalters 308, dessen Ansteuerung im folgenden anhand der Figur 4 beschrieben wird.

Zu einem Zeitpunkt t_{EIN,} der im folgenden noch definiert wird, wird der Schalter 308 geschlossen. Daraufhin fließt ein Strom durch die Spule 307 und den Schalter 308, der den Kondensator 309 auflädt. Sobald der Kondensator 309 vollständig aufgeladen ist, d.h. die an ihm abfallende Spannung und damit auch die gespeicherte Energie maximal ist, erreicht der den Schalter durchfließende Strom einen Wert von Null. Jetzt wird der Schalter 308 zum Zeitpunkt t_{AUS} wieder geöffnet und der Stromfluß damit unterbrochen.

Der Zeitpunkt zum erneuten Einschalten des Schalters 308 wird so gewählt, daß der Kondensator 309 während der Ausschaltphase des Schalters 308 seine Energie auf die zu ihm parallel angeordnete Spule 310 umladen kann. Während des Umladens sinkt die am Kondensator 309 abfallende Spannung U₁. Unterschreitet diese Spannung U₁ einen vorgegebenen Wert oder ist sie Null, bedeutet das, daß die Kondensatorenergie umgeladen ist. Jetzt ist der Zeitpunkt t_{EIN} erreicht, an dem der Schalter 308 wieder geschlossen wird und den Kondensator 309 erneut auflädt. Damit beginnt der eben beschriebene Vorgang von neuem.

Es sei an dieser Stelle noch angemerkt, daß das untere Ende des Kondensators 309 positiv und das obere Ende des Kondensators 309 negativ ist, entsprechend dem positiven unteren Eingang und dem negativen oberen Eingang des Wechselrichters B.

Die als Energie-Zwischenspeicher dienende Spule 310 überträgt ihre Energie wiederum auf den parallel geschalteten Kondensator 312 über die Diode 311.

Zur Erzielung einer haben Resonanzfrequenz des Schwingkreises 307, 309 wird für den Kondensator 309 eine kleine Kapazität ausgewählt. Aufgrund dieser kleinen Kapazität weist die daran abfallende Spannung U₁ eine große Welligkeit auf, d.h. die Glättungswirkung eines solchen Kondensators ist relativ gering. Dies ist der Grund dafür, daß Energie von dem Kondensator 309 über die als Zwischenspeicher dienende Spule 310 an den am Ausgang des Sperrwandlers B liegenden Kondensator 312 übertragen wird, dessen Kapazität sehr viel größer gewählt werden kann.

Der Sperrwandler B ist als invertierender Sperrwandler aufgebaut, was beduetet, daß die an seinem Ausgang anliegende Spannung die umgekehrte Polarität zu der an seinem Eingang anliegenden Spannung aufweist. Aus diesem Grund ist zwischen den Kondensator 309 und den am Ausgang liegenden Kondensator 312 die Diode 311 geschaltet.

Die Steuerung des Schalters 308 erfolgt durch eine Steuerschaltung 313, die in Block E angeordnet ist. Die Steuerschaltung 313 erhält über mehrere in der Schaltung ausgebildete Meßglieder entsprechende Istwert-Signale und ist mit dem Schalter 308 über eine Steuerleitung 314 verbunden.

Wie bereits erwähnt, entnimmt der Sperrwandler B dem Netz Pakte halbsinusförmiger Stromimpulse. Dazu wird der Schalter 308 geschlossen, wenn die Spannung U₁ null wird oder einen bestimmten Spannungswert unterschreitet. Eine als Spannungsteiler aufgebaute Serienschaltung aus zwei Widerständen 315, 316, die parallel zum Kondensator 309 angeordnet ist, dient als Spannungsmeßglied, an dessen Mittelabgriff ein der Spannung U1 proportionales Spannungssignal abfällt. Dies wird über eine Steuerleitung 335 an die Steuerschaltung 313 übertragen.

Die halbsinusförmigen aus dem Netz entnommenen Stromimpulse durchfließen einen in Serie zu dem Schalter 308 liegenden Widerstand 317, der als Strommeßglied dient. Das Strommeßglied ist mit der Steuerschaltung 313 über eine Leitung 318 verbunden und liefert der Steuerschaltung ein dem Strom proportionales Spannungssignal. Den Zeitpunkt t_{AUS} zum Öffnen des Schalters 308 erkennt die Steuerschaltung 313 an einem vom Strommeßglied 317 gelieferten Spannungssignal von Null, was auch einem den Schalter 308 durchfließenden Strom von Null entspricht.

Zusätzlich zu den zuvor beschriebenen Meßgliedern ist am Eingang des Sperrwandlers B ein weiteres Spannungsmeßglied angeordnet, das aus zwei Widerständen 350, 351 besteht und mit der Steuerschaltung 313 verbunden ist. Das der Eingangsspannung des Sperrwandlers B proportionale Meßsignal dient zur Überwachung der Eingangsspannung. Sollte beispeilsweise die Amplitude dieser Spannung - bedingt durch Netzschwankungen - von einem vorgegebenen Soll-Wert abweichen, so kann die Steuerschaltung darauf reagieren und die Störung ausregeln.

Als weiteres Regelkriterium dient eine am Mittelabgriff eines aus zwei Widerständen 331, 332 gebildeten Spannungsteilers abfallende Spannung, die der Steuerschaltung 313 über eine Leitung 335 zugeführt wird. Die Serienschaltung aus den beiden Widerständen 331, 332 liegt parallel zu dem Glättungskondensator 312. Die am Mittelabgriff dieser beiden Widerstände abfallende Spannung ist als ein Maß für die am Ausgang des Sperrwandlers B entstehende Gleichspannung.

Die am Ausgang des Sperrwandlers B anliegende Spannung speist einen sich anschließenden geschalteten Wechselrichter C. Dieser weist wie üblich zwei zwischen den Eingängen in Reihenschaltung angeordnete steuerbare Schaltelemente 319, 320, vorzugsweise Transistoren oder Feldeffekttransistoren, auf, die abwechselnd öffnen und schließen. Der Wechselrichter ist freischwingend. In den Steuerkreisen der Schalter 319, 320 sind Sekundärwicklungen 321, 322 eines Transformators angeordnet, dessen Primärwicklung 323 im Lastkreis D liegt. Abhängig vom Strom durch die Primärwicklung 323 des Transformators werden die Schalter 319, 320 abwechselnd geöffnet und gesperrt, so daß eine etwa rechteckförmige Spannung am Ausgang des Wechselrichters C entsteht. Im Gegensatz zum Stand der Technik, wird jedoch der Schalter 320 nicht direkt über die Sekundärwicklung 322 des Transformators gesteuert. Der normalerweise am Steuereingang des Schalters 320 liegende Ausgang der Sekundärwicklung 322 ist hier mit einem Eingang der Steuerschaltungen 313 verbunden, die ihrerseits über eine Steuerleitung 324 den Schalter 320 steuert.

Jeweils parallel zu den Sekundärwicklungen 321 bzw. 322 sind in Serie aber gegensinnig geschaltete Zenerdioden 337,338 bzw. 339,340 zum Schutz des Steuereingangs des Schalters 319 bzw. 320 vor zu hohen Spannungen angeordnet.

Der Lastkreis D für den Wechselrichter besteht aus der Gasentladungslampe 336 mit über einen Kondensator 326 in Serie geschalteten Heizwendeln. Die eine (untere) Heizwendel ist direkt mit dem Wechselrichter C verbunden. Die andere (obere) Heizwendel ist über die Serienschaltung eines Trennkondensators 334, einer Spule 325 und die Primärwicklung der Gasentladungslampe mit dem Wechselrichter C verbunden. die Spule 325 und der Kondensator 326 bilden einen Serienschwingkreis.

Mit Hilfe der Steuerschaltung ist es möglich, die an der Gasentladungslampe 325 anliegende Spannung U_{L} und damit deren Helligkeit zu variieren. Beim Stand der Technik erfolgt ein solches Dimmen durch Verändern der Frequenz der am Ausgang des Wechselrichters C anliegenden Spannung, wodurch eine Spannungsänderung am im Lastkreis angeordneten Serienschwingkreiskondensator 326 hervorgerufen wird. Bei einem freischwingenden Wechselrichter kann dagegen dessen Grundfrequenz nicht gezielt verändert und zur. Steuerung der Lampenhelligkeit (Dimmen) ausgenutzt werden. Das Dimmen der Gasentladungslampe erfolgt hier stattdessen dadurch, daß die Steuerschaltung 313 über die Steuerleitung 324 das Tastverhältnis des Schalters 320 beeinflußt, wodurch das Amplitudenverhältnis zwischen der Grundwelle und den höherfrequenten Oberwellen zugunsten der letzteren verschiebt. Da der im Lastkreis D durch die Spule 325 und den Kondensator 326 gebildete Serienschwingkreis auf die Grundfrequenz abgestimmt ist, sinkt durch Verändern des Tastverhältnisses bzw. der Impulsbreite des Wechselrichterausgangssignals die Spannung U_{L} am Kondensator 326 und damit auch die Helligkeit der parallel zum Kondensator 326 angeordneten Entladungslampe 336.

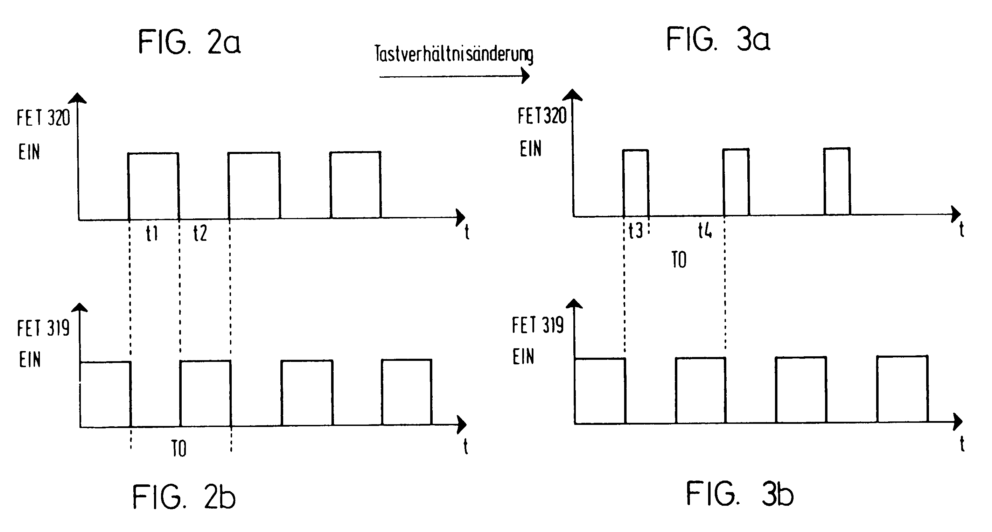

In den Figuren 2 und 3 ist dieser Sachverhalt nochmals verdeutlicht. Die hier aus Gründen der Schematisierung rechteckförmig gezeichneten Steuersignale für die beiden Schalter 319, 320 sind gegeneinander deart phasenverschoben, daß zu keinem Zeitpunkt beide Schalter 319, 320 gleichzeitig geschlossen sind. Die Phasenverschiebung wird durch die gegensinnige Anordnung der Sekundärwicklungen 321, 322 erreicht. Die Ansteuerungssignale der ungedimmten Betriebsart sind in den Fig. 2a bzw. 2b dargestellt. Die Periode der rechteckförmigen Ansteuersignale beträgt T0, die sich aus der "EIN"-Zeitdauer t1 und der "AUS"-Zeitdauer t2 zusammensetzt. In den Fig. 2a und 2b sind t1 und t2 im wesentlichen gleich groß.

Fig. 3a zeigt die Änderung des den Schalter 320 ansteuernden Signals. Das ursprüngliche Tastverhältnis t1/t2 hat sich nach t3/t4 verschoben, wobei t3 kleiner als tl und t4 größer als t2 ist. Die Ansteuerung des anderen Schalters 319 ändert sich nicht (vgl. Fig. 3b), da die Periode T0 des geänderten Signals (Fig. 3a) gleich bleibt.

Die Steuerschaltung 313 wertet für die Bildung des Steuersignals Informationen aus, die sie von verschiedenen Meßgliedern erhält. Eine Information erhält sie, wie bereits erwähnt, von der Sekundärwicklung 322 des im Lastkreis D angeordneten Transformators. Diese Information betrifft den Schaltzustand des Schalters 320.

Außerdem erfolgt eine Ist-Wert-Messung der Lampen spannung U_{L,} indem diese von einem parallel zur Lampe 336 geschalteten Spannungsteiler 327, 328 abgenommen und der Steuerschaltung 313 zugeführt wird. Ein im Strompfad der Lampe angeordneter Widerstand 329 dient zudem als Strommeßglied und liefert ein dem Lampenstrom proportionales Spannungssignal über die Steuerleitung 330 an die Steuerschaltung 313.

Mit Hilfe dieser Meßglieder kann durch entsprechendes Auswerten der entsprechenden Informationen auf Störeinflüsse, wie z.B. Netzspannungsänderungen, reagiert werden.

Zu erwähnen ist noch, daß sich - wie die Praxis gezeigt hat - mit der Beeinflussung des Tastverhältnisses auch die Frequenz des selbstschwingenden Systems ändert. Dies ist in den Fig. 2 und 3 nicht berücksichtigt.

Die Steuerschaltung 313, die beispielsweise als ASIC (Application Specific Integrated Circuit) gefertigt sein kann, erlaubt darüber hinaus die Konstanthaltung der von der Gasentladungslampe 336 aufgenommenen Leistung, und zwar unabhängig davon, welcher Lampentyp (beispielsweise Argon oder Krypton, die stark unterschiedliche Strom-/Spannungs-Charakteristiken haben), eingesetzt wird. Hierbei werden die Lampenspannung U_{L} und der Lampenstrom I_{L}, wie zuvor beschrieben, gemessen, und in der Steuerschaltung 313 mit entsprechenden Sollwerten verglichen. Bei Abweichung des Ist-Werts vom Soll-Wert wird eine korrigierende Maßnahme getroffen, die beispielsweise durch Beeinflussung des Tastverhältnisses des Schalters 320 oder durch Regeln des Sperrwandlers B erfolgen kann.

## Patentansprüche

1. Vorschaltgerät für eine Gasentladungslampe (336) mit
einem von einer Gleichspannungsquelle (A) gespeisten freischwingenden Wechselrichter (C), der eine parallel zur Gleichspannungsquelle angeordnete Serienschaltung aus zwei steuerbaren Schaltern (319, 320) aufweist,
einem parallel zu einem der beiden Schaltern (320) angeordneten Lastkreis (D), der einen Serienschwingkreis, bestehend aus einer Induktivität (325) und einer Kapazität (326) enthält, wobei die Gasentladungslampe (336) parallel zur Kapazität (326) des Schwingkreises angeordnet ist,
jeweils einem Steuerkreis für die beiden Schalter (319, 320), in denen jeweils eine Sekundärwicklung (321, 322) eines Transformators (321, 322, 323) liegt, wobei die beiden Sekundärwicklungen (321, 322) zueinander gegensinnig angeordnet sind und die den Sekundärwicklungen (321, 322) zugeordnete Primärwicklung (323) in Serie zu der Gasentladungslampe (336) liegt, und
einer Steuerschaltung (313), mittels welcher das Tastverhältnis mindestens eines (320) der beiden Schalter (319, 320) in Abhängigkeit von einem Steuersignal (324) beeinflußbar ist, wobei das Steuersignal (324) abhängig von mindestens einer Steuerinformation gewinnbar ist,
**dadurch gekennzeichnet**,
daß ein Anschluß der Sekundärwicklung (322), die im Steuerkreis des von der Steuerschaltung (313) gesteuerten Schalters (320) liegt, mit der Steuerschaltung (313) direkt verbunden ist, und
daß eine Steuerinformation zur Gewinnung des Steuersignals (324) aus der an die Steuerschaltung (313) angeschlossenen Sekundärwicklung (322) abgeleitet ist.

2. Vorschaltgerät nach Anspruch 1,
**dadurch gekennzeichnet**,
daß weitere Steuerinformationen zur Gewinnung des Steuersignals (324) aus der Lampenspannung (U_{L} und/oder dem Lampenstrom (I_{L}) abgeleitet sind.

3. Vorschaltgerät nach Anspruch 1 oder 2,
**dadurch gekennzeichnet**,
daß die dem Wechselrichter (C) zugeführte Gleichspannung zur Gewinnung des Steuersignals (324) als weitere Steuerinformation auswertbar ist.

4. Vorschaltgerät nach Anspruch 2,
**dadurch gekennzeichnet**,
daß die Steuerschaltung (313) mit einem Spannungsmeßglied (327, 328) zur Messung der lampenspannung (U_{L}) verbunden ist, das parallel zur Kapazität (326) des Serienschwingkreises angeordnet ist.

5. Vorschaltgerät nach Anspruch 2 oder 4,
**dadurch gekennzeichnet**,
daß ein Strommeßglied (329) mit der Gasentladungslampe (336) in Serie liegt, und daß der von dem Strommeßglied (329) gemessene Lampenstrom (I_{L}) der Steuerschaltung (313) zuführbar ist.

6. Vorschaltgerät nach Anspruch 3,
**dadurch gekennzeichnet**,
daß parallel zu den beiden Schaltern (319, 320) ein weiteres Spannungsmeßglied (331, 332) zur Messung der dem wechselrichter (C) zugeführten Gleichspannung angeordnet ist, welches mit der Steuerschaltung (313) verbunden ist.

7. Vorschaltgerät nach einem der vorhergehenden Ansprüche,
**dadurch gekennzeichnet**,
daß jeweils parallel zu den Sekundärwicklungen (321, 322) eine Serienschaltung aus zwei antiparallel geschalteten Zenerdioden (337, 338; 339, 340) liegt.

8. Vorschaltgerät nach einem der vorhergehenden Ansprüche,
**dadurch gekennzeichnet**,
daß die steuerbaren Schalter (319, 320) Transistoren oder Feldeffekttransistoren sind.

## Claims

1. Ballast for a gas discharge lamp (336) having
a free running inverter (C) fed from a d.c. voltage source (A), which inverter has a series circuit of two controllable switches (319, 320) arranged parallel to the d.c. voltage source,
a load circuit (D) arranged parallel to one of the two switches (320), which load circuit includes a series oscillation circuit consisting of an inductance (325) and a capacitance (326), the gas discharge lamp (336) being arranged parallel to the capacitance (326) of the oscillation circuit,
respective control circuits for the two switches (319, 320), in which there lies in each case one secondary winding (321, 322) of a transformer (321, 322, 323), the two secondary windings (321, 322) being arranged in opposite senses with respect one to the other and the primary winding (323) associated with the secondary windings (321, 322) lying in series to the gas discharge lamp (336), and
control circuitry (313) by means of which the duty ratio of at least one (320) of the two switches (319, 320) can be influenced in dependence upon a control signal (324), the control signal (324) being obtainable in dependence upon at least one item of control information,
characterized in that,
one terminal of the secondary winding (322) which lies in the control circuit of the switch (320) controlled by the control circuitry (313) is directly connected with the control circuitry (313), and
in that an item of control information for the purpose of obtaining the control signal (324) is derived from the secondary winding (322) connected to the control circuitry (313).

2. Ballast according to claim 1,
characterized in that,
further items of control information for the purpose of obtaining the control signal (324) are derived from the lamp voltage (U_{L}) and/or from the lamp current (I_{L}).

3. Ballast according to claim 1 or 2,
characterized in that,
the d.c. voltage supplied to the inverter (C) can be evaluated as a further item of control information for the purpose of obtaining the control signal (324).

4. Ballast according to claim 2,
characterized in that,
the control circuitry (313) is connected with a voltage measurement member (327, 328) for measurement of the lamp voltage (U_{L}), which voltage measurement member is arranged parallel to the capacitance (326) of the series oscillation circuit.

5. Ballast according to claim 2 or 4,
characterized in that,
a current measurement member (329) lies in series with the gas discharge lamp (336) and the lamp current (I_{L}) measured by the current measurement member (329) can be supplied to the control circuitry (313).

6. Ballast according to claim 3,
characterized in that,
a further voltage measurement member (331, 332) is arranged in parallel to the two switches (319, 320) for measurement of the d.c. voltage supplied to the inverter (C), which further voltage measurement member is connected with the control circuitry (313).

7. Ballast according to any preceding claim,
characterized in that,
respective series circuits of two Zener diodes (337, 338; 339, 340), connected anti-parallel, lie parallel to the respective secondary windings (321, 322).

8. Ballast according to any preceding claim,
characterized in that,
the controllable switches (319, 320) are transistors or field effect transistors.

## Revendications

1. Ballast pour une lampe à décharge (336) comportant
un onduleur (C) à oscillation libre alimenté par une source de tension continue (A), qui comprend un circuit série de deux interrupteurs (319, 320) commandés monté en parallèle avec la source de tension continue,
un circuit de charge (D) monté en parallèle avec l'un des deux interrupteurs (320), qui comporte un circuit oscillant série formé d'une inductance (325) et d'une capacité (326), la lampe à décharge (336) étant montée en parallèle avec la capacité (326) du circuit oscillant,
un circuit de commande pour chacun des deux interrupteurs (319, 320) avec chaque fois un enroulement secondaire (321, 322) d'un transformateur (321, 322, 323), les deux enroulements secondaires (321, 322) étant montés en opposition et l'enroulement primaire (323) associé aux enroulements secondaires (321, 322) étant monté en série avec la lampe à décharge (336) et
un circuit de commande (313) à l'aide duquel le rapport cyclique d'au moins l'un (320) des deux interrupteurs peut être modifié en fonction d'un signal de commande (324), le signal de commande (324) étant obtenu en fonction d'au moins une information de commande,
caractérisé par le fait
qu'une borne de l'enroulement secondaire (322) placé dans le circuit de déclenchement de l'interrupteur (320) commandé par le circuit de commande (313) est connectée directement au circuit de commande (313) et
qu'une information de commande pour obtenir le signal de commande (324) est prélevée sur l'enroulement secondaire (322) connecté au circuit de commande (313).

2. Ballast selon la revendication 1, caractérisé par le fait que des informations de commande supplémentaires pour l'obtention du signal de commande (324) sont dérivées de la tension de lampe (U_{L}) et/ou du courant de lampe (I_{L}).

3. Ballast selon la revendication 1 ou 2, caractérisé par le fait que la tension continue appliquée à l'onduleur (C) peut être exploitée en tant qu'information de commande supplémentaire pour obtenir le signal de commande (324).

4. Ballast selon la revendication 2, caractérisé par le fait que le circuit de commande (313) est connecté à un élément de mesure de tension (327, 328) pour la mesure de la tension de lampe (U_{L}), lequel élément est monté en parallèle avec la capacité (326) du circuit oscillant série.

5. Ballast selon la revendication 2 ou 4, caractérisé par le fait qu'un élément de mesure de courant (329) est connecté en série avec la lampe à décharge (336) et par le fait que le courant de lampe (I_{L}) mesuré par l'élément de mesure de courant (329) est envoyé au circuit de commande (313).

6. Ballast selon la revendication 3, caractérisé par le fait qu'un élément de mesure de tension (331, 332) supplémentaire pour la mesure de la tension continue appliquée à l'onduleur (C) est monté en parallèle avec les deux interrupteurs (319, 320), lequel élément de mesure est connecté au circuit de commande (313).

7. Ballast selon l'une des revendications précédentes, caractérisé par le fait qu'un circuit série de deux diodes Zener (337, 338; 339, 340) en montage anti-parallèle est monté en parallèle avec chacun des enroulement secondaires (321, 322).

8. Ballast selon l'une des revendications précédentes, caractérisé par le fait que les interrupteurs (319, 320) commandés sont des transistors ou des transistors à effet de champ.
